# EUROPÄISCHE PATENTSCHRIFT

(11) **EP 1 036 750 B1**
(45) Veröffentlichungstag und Bekanntmachung des Hinweises auf die Patenterteilung: **13.08.2003**
(21) Anmeldenummer: 00103212.7
(22) Anmeldetag: 17.02.2000
(51) Int. Cl.: B65G 65/48, B29C 47/10

(54) **Einrichtung zum Fördern von Kunststoffgranulat**
Device for transport of plastic granules
Dispositif de transport des granulés en matière plastique

(30) Priorität: 18.03.1999 DE 19912277
(43) Veröffentlichungstag der Anmeldung: 20.09.2000
(73) Patentinhaber: MANN+HUMMEL ProTec GmbH, 71636 Ludwigsburg (DE)
(72) Erfinder: Goth, Gerhard, 71726 Benningen (DE)
(74) Vertreter: Voth, Gerhard, Dipl.-Ing.

(56) Entgegenhaltungen:
- EP-A- 0 911 131
- DE-A- 4 328 071
- FR-A- 2 663 259
- FR-A- 2 696 161
- US-A- 3 920 229
- US-A- 4 217 996
- US-A- 5 213 724

## Beschreibung

Die Erfindung betrifft eine Einrichtung zur Fördern von Kunststoffgranulat gemäß dem Oberbegriff des Anspruchs 1. Solche Einrichtungen sind bekannt und beispielsweise in der Veröffentlichung VKD 415 der FILTERWERK MANN + HUMMEL GMBH beschrieben. Diese Einrichtungen dienen dazu, Kunststoffgranulat in unterschiedlicher Zusammensetzung, ausgehend von einem Silo zu den Spritzgießmaschinen zu fördern. Dabei müssen verschiedene Verfahrensschritte durchgeführt werden, wie das Mischen verschiedener Komponenten bzw. das Zuführen von Farbpigmenten, das Dosieren und Wägen der einzelnen Komponenten, das Trocknen des Kunststoffgranulats in entsprechenden Trocknungseinrichtungen und das Verteilen der Materialströme auf unterschiedliche Verarbeitungssysteme.

Gerade zum Fördern von Kunststoffgranulat haben sich Fördergeräte bewährt, die beispielsweise in der Veröffentlichung VKD 439 der MANN + HUMMEL ProTec GMBH beschrieben sind. Diese Fördergeräte dienen der automatischen Beschickung von Behältern, Waagen, Mischern, Dosiergeräten und Verarbeitungsmaschinen und bestehen in der Regel aus einer Förder- und einer Gebläsestation. Mit den bekannten Einrichtungen zum Fördern von Kunststoffgranulat konnte eine Vielzahl von Kunststoffsorten aufbereitet werden. Es hat sich jedoch gezeigt, daß Granulatsorten, die ein hohes Kohäsionsverhalten aufweisen, wie beispielsweise Silikongranulat, dazu neigen, in den Fördereinrichtungen zu verbacken oder zu verklumpen und damit die Förderung erschweren. Vor allem Silikon wurde bisher in Blöcken, Strängen oder Bändern mittels geeigneter Zuführungen oder Stopfeinrichtungen dem Extruder einer Spritzgießmaschine zugeführt. Dieses Verfahren erforderte sehr aufwendige Zuführeinrichtungen und ermöglichte keine Dosierung oder Mischung verschiedener Komponenten.

Die DE 43 28 071 beschreibt eine Einrichtung zum Fördern von Kunststoffgranulat, die einen Vorratsbehälter aufweist sowie eine in dem Vorratbehälter angeordnete Einrichtung zur Auflockerung des Kunststoffgranulats und eine Austragseinrichtung zum Transport des Granulats in einen weiteren Behälter.

DerErfindung liegt die Aufgabe zugrunde, eine Einrichtung-zum-Fördern von Kunststoffgranulat zu schaffen, welche das Verarbeiten und Verteilen von bisher schwer förderbarem Granulat ermöglicht.

Diese Aufgabe wird durch die Merkmale des Anspruchs 1 gelöst.

Erfindungsgemäß besitzt der Vorratsbehälter für das Kunststoffgranulat eine Einrichtung zum Auflockern desselben und eine Absaugeinrichtung als Austragseinrichtung, die das Granulat mittelbar oder unmittelbar einem Extrudervorbehälter zuführt. Die Einrichtung zur Auflockerung des Kunststoffgranulats ist beispielsweise ein Rührarm oder ein Rührteller, an welchem Stege angeordnet sind, die das Granulatmaterial schonend in Bewegung halten. Der Rührarm oder Rührteller hat gleichzeitig die Aufgabe, das Material vordosiert der Austragseinrichtung zuzuführen. Auch dies muß materialschonend erfolgen.

Die Erfindung sieht weiterhin vor, die Absaugung aus dem Vorratsbehälter dort vorzusehen, wo die Auflockerung des Kunststoffgranulats erfolgt. Außerdem ist es zweckmäßig, den Frischluftanteil für die Absaugeinrichtung unmittelbar in diesem Bereich dem Vorratsbehälter zuzuführen und durch eine Granulatrückhalteblende stufenlos einzustellen.

Anstelle eines im Vorratsbehälters angeordneten Rührarms können auch andere mechanische oder fluidisierend wirkende Einrichtungen verwendet werden, die das Granulat im Bereich des Materialaustrags in Bewegung halten.

Gemäß einer Ausgestaltung der Erfindung ist die Absaugleitung nicht in aufsteigender Richtung verlaufend, damit gewährleistet ist, dass das zu fördernde Granulat nicht zum verklumpen neigt.

Die Förderung bzw. Absaugung erfolgt mit einem handelsüblichen Fördergerät, wie es beispielsweise der oben genannten Veröffentlichung VKD 439 zu entnehmen ist. Dieses Fördergerät hat den Vorteil, daß es kompakt aufgebaut ist, eine separate Gebläsestation aufweist und der Fördervorgang variabel gesteuert werden kann.

Eine weitere Ausgestaltung der Erfindung sieht vor, dem Fördergerät einen Zwischenbehälter nachzuschalten. Dieser besteht im wesentlichen aus einem senkrechten, schlanken Rohr, d. h. einem Rohr, das einen gegenüber dessen Länge relativ geringen Durchmesser aufweist. Dieser Aufbau hat den Vorteil, daß eine Verklumpung oder ein Verkleben des Kunststoffgranulats wirksam unterbunden werden kann.

Eine weitere Ausgestaltung der Erfindung, insbesondere des Zwischenbehälters, liegt in der Zweiteilung des Rohres. Während der obere Teil des Rohres starr, d. h. gestellfest angeordnet ist, wird der untere Teil mit einer Schwingrinne verbunden. Die Schwingrinne dient dabei zur Dosierung des Kunststoffgranulats in den Extrudervorbehälter. Durch die starre Verbindung zwischen Schwingrinne und unterem Teil des Zwischenbehälters ist ein zuverlässiger Transport des Kunststoffgranulats aus dem Zwischenbehälter in die Schwingrinne möglich. Oberer und unterer Teil des Zwischenbehälters sind mit einer flexiblen Manschette verbunden.

Zur Überwachung, Steuerung und/oder Regelung der Einrichtung sind an verschiedenen Behältern in vorteilhafter Weise Sensoren angeordnet, die den Füllstand feststellen. Die Sensorsignale können einer elektronischen Steuerung zugeführt werden, welche das System an den Granulatbedarf der Spritzgießmaschine anpaßt und Störungen im System erkennen kann.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt:
- Figur 1: die schematische Darstellung einer Einrichtung zum Fördern von Kunststoffgranulat,
- Figur 2: eine Einrichtung zum Fördern zweier Materialkomponenten.

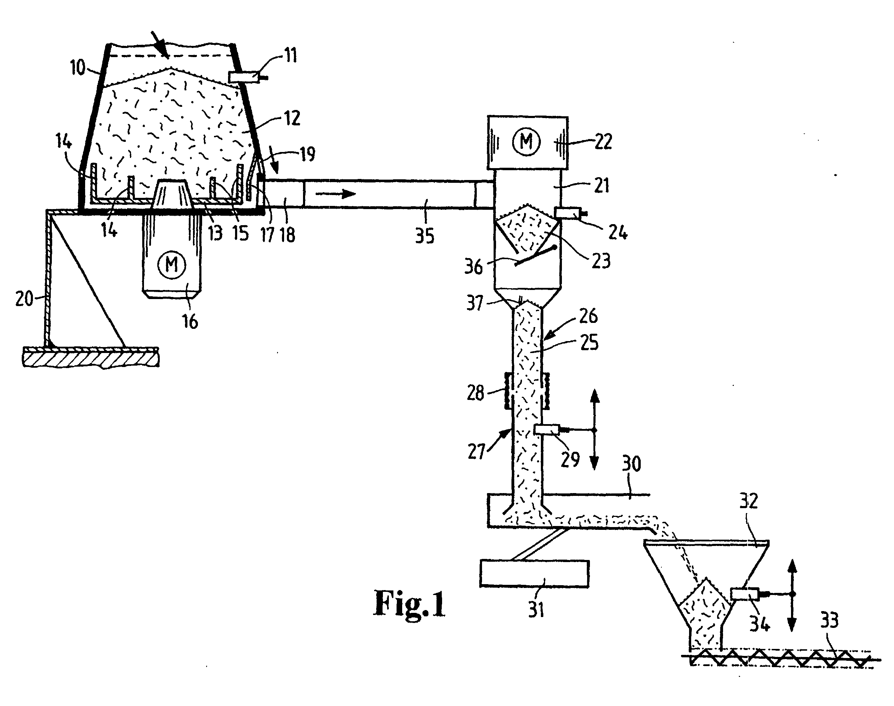

Die schematische Darstellung gemäß Figur 1 enthält einen Vorratsbehälter 10, welcher einen Füllstandssensor 11 aufweist sowie am Boden des Vorratsbehälters angeordnet eine Einrichtung zum Auflockern des im Behälter befindlichen Kunststoffgranulats 12. Die Einrichtung zum Auflockern des Kunststoffgranulats ist ein Rührarm 13, auf welchen Stege 14, 15 befestigt sind. Der Rührarm wird von einem Motor 16 angetrieben. Innerhalb des Vorratsbehälters 10 ist eine Granulatrückhalteblende 17 im Bereich der Austragseinrichtung 18 verstellbar angeordnet. Oberhalb der Austragseinrichtung 18 befindet sich eine Öffnung 19 zur Zuführung von Frischluft. Der Öffnungsquerschnitt kann verändert werden, so daß sich die Frischluftzufuhr regulieren läßt. Der Vorratsbehälter 10 weist eine sich nach unten vergrößernde Querschnittsform auf. Dadurch lassen sich Zusammenbackungen des Materials oder Brückenbildung vermeiden. Der Vorratsbehälter ist auf einem geeigneten Gestell 20 angeordnet. Die Austragseinrichtung 18 ist ein Rohr, welches mit einem Fördergerät 21 verbunden ist. Dieses Fördergerät weist ein Sauggebläse 22 auf sowie einen Behälter 23 mit einem verschließbaren Boden und einen Füllstandssensor 24.

Unterhalb des Fördergeräts 21 ist ein Zwischenbehälter 25 vorgesehen. Dieser besteht aus einem oberen Teil 26 und einem unteren Teil 27. Beide Teile sind über eine flexible Manschette 28 miteinander verbunden. Auch der Zwischenbehälter ist mit einem Füllstandssensor 29 ausgestattet, welcher nach oben oder unten verschiebbar angeordnet ist. Das untere Teil 27 des Zwischenbehälters ist starr mit einer Schwingrinne 30 verbunden. Diese Schwingrinne 30 wird von einem Schwingantrieb 31 bewegt und dosiert das Kunststoffgranulat in einen Extrudervorbehälter 32. Unmittelbar unter dem Extrudervorbehälter befindet sich der Extruder 33 oder eine Spritzgießmaschine.

Am Extrudervorbehälter kann ein weiterer Sensor 34 vorgesehen sein. Das in den Vorratsbehälter 10 eingefüllte Material, beispielsweise Silikongranulat, wird im unteren Bereich durch eine relativ langsame Drehung des Rührarms 13 in Bewegung gehalten. Das Sauggebläse 22 saugt über die Austragseinrichtung 18 und die Verbindungsleitung 35 Material aus dem Vorratsbehälter 10 in das Fördergerät 21. Sobald im Fördergerät ein bestimmter Füllstand erreicht ist, öffnet die Klappe 36 des Behälters 23 und entleert den Inhalt in den Zwischenbehälter 25. Durch die Schwingrinne 30 wird der Inhalt des Behälters 25 dem Extruder 33 bzw. dem Extrudervorbehälter 32 zugeführt.

Eine entscheidende Maßnahme zur Verhinderung des Zusammenklumpens bzw. Brückenbildens des Silikongranulats liegt darin, daß der Zwischenbehälter 25 nur bis zu seiner Oberkante 37 gefüllt wird. Durch geeignete Sensierung der Füllhöhe in Verbindung mit einer Steuerung ist die maximal zulässige Befüllung ohne weiteres zu bewerkstelligen.

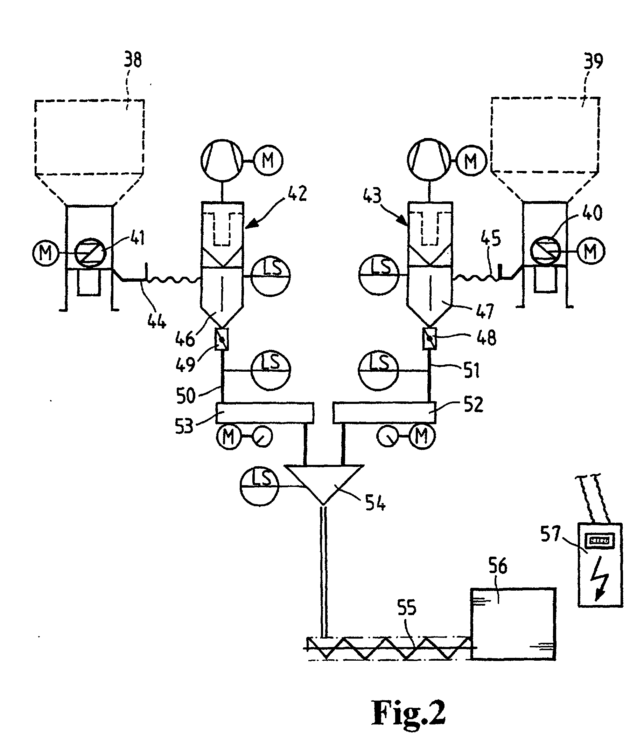

Figur 2 zeigt eine Vorrichtung, mit welcher zwei Kunststoffkomponenten einem Extruder bzw. einer Spritzgießmaschine zugeführt werden können. In den Vorratsbehältern 38, 39 befindet sich beispielsweise Silikongranulat. Dieses wird im unteren Bereich der Vorratsbehälter durch die Rühreinrichtungen 40, 41 in Bewegung gehalten. Der Austrag erfolgt auch hier mit Fördergeräten 42, 43. Diese Fördergeräte arbeiten im Unterdruckbetrieb und fördern das Kunststoffgranulat über die Rohre 44, 45 in die Behälter 46, 47. Von diesen Behältern aus gelangt das jeweilige Kunststoffgranulat über Klappen 48, 49 zu rohrförmigen Zwischenbehältern 50, 51, wobei die Zwischenbehälter auch aus einem unteren und einem oberen Teil bestehen. Das untere Teil ist jeweils an die Schwingrinnen 52, 53 angekoppelt. Der Schwingrinnenaustrag erfolgt unmittelbar in den Extrudervorbehälter 54. Von dort gelangt das Material in den Extruder 55 oder die Spritzgießmaschine.

Die gesamte Steuerung der mit M bezeichneten Motoren erfolgt ausgehend von den mit LS bezeichneten Füllstandssensoren über ein Steuergerät 57, wobei die Verbindungsleitungen in dieser schematischen Zeichnung nicht dargestellt sind.

## Patentansprüche

1. Einrichtung zum Fördern von Kunststoffgranulat, insbesondere Silikongranulat, bestehend aus einem Vorratsbehälter (10), einer in dem Vorratsbehälter (10) angeordneten Einrichtung zur Auflockerung des Kunststoffgranulats (129) und einer Austragseinrichtung (18) zum mittelbaren oder unmittelbaren Transport des Granulats in einen Extrudervorbehälter (32), wobei die Austragseinrichtung eine Absaugeinrichtung ist, **dadurch gekennzeichnet, dass** der Frischluftanteil für die Absaugeinrichtung stufenlos einstellbar ist und der Absaugausgang mit einer einstellbaren Granulatrückhalteblende (17) versehen ist.

2. Einrichtung nach Anspruch 1, **dadurch gekennzeichnet, daß** die Absaugleitung (35) in waagrechter oder abfallender Richtung verläuft.

3. Einrichtung nach Anspruch 2, **dadurch gekennzeichnet, daß** die Absaugeinrichtung unmittelbar im Bereich der Einrichtung zur Auflockerung des Kunststoffgranulats (12) angeordnet ist, wobei die Einrichtung zur Auflockerung des Kunststoffgranulats ein rotierender Rührarm (13) ist.

4. Einrichtung nach einem der vorherigen Ansprüche, **dadurch gekennzeichnet, daß** zwischen dem Vorratsbehälter (10) und dem Extrudervorbehälter (32) ein Fördergerät (21) vorgesehen ist, welchem über die Absaugeinrichtung das Kunststoffgranulat (12) zugeführt wird.

5. Einrichtung nach Anspruch 4, **dadurch gekennzeichnet, daß** dem Fördergerät nachgeschaltet ein Zwischenbehälter (25) vorgesehen ist, der ein senkrechtes Rohr aufweist, welches eine schlanke Bauweise aufweist, wobei dieser Zwischenbehälter die gesamte von dem Fördergerät (21) abgegebene Granulatmenge aufnehmen kann.

6. Einrichtung nach Anspruch 5, **dadurch gekennzeichnet, daß** der Zwischenbehälter (25) wenigstens zweigeteilt ist und der untere Teil (27) des Zwischenbehälters mit einer im unteren Bereich des Zwischenbehälters angeordnete Schwingrinne (30) starr verbunden ist und der obere Teil (26) des Zwischenbehälters (25) über eine flexible Manschette (28) mit dem unteren Teil des Zwischenbehälters verbunden ist.

7. Einrichtung nach Anspruch 5 oder 6, **dadurch gekennzeichnet, daß** eine Dosierung des Kunststoffgranulats (12) über die Schwingrinne (30) in den Extrudervorbehälter (32)erfolgt.

8. Einrichtung nach einem der vorherigen Ansprüche, **dadurch gekennzeichnet, daß** an dem Extrudervorbehälter (32) und/oder an dem Zwischenbehälter (25) und/oder an dem Fördergerät (21) und/oder an dem Vorratsbehälter(10) ein Sensor (11, 24, 29, 34) zur Erfassung des Füllstands vorgesehen ist und wobei wenigstens ein Sensor stufig oder stufenlos verschiebbar angeordnet ist zur Einstellung unterschiedlicher Füllstandshöhen.

9. Einrichtung nach einem der vorherigen Ansprüche, **dadurch gekennzeichnet, daß** die Arbeitsabläufe ausgehend von dem Auflockern des Kunststoffgranulats im Vorratsbehälter (10) bis zur Dosierung des Kunststoffgranulats in den Extrudervorbehälter (32) mit einer elektronischen Steuerung, insbesondere einer SPS-Steuerung, durchgeführt wird und diese Steuerung auch Störungen im System erkennt.

## Claims

1. Device for plastic granulates , especially silicone granulates, the device being constituted of a storage container (10), of a device arranged in the storage container (10) for mixing up the plastic granulate (129) and of a dispensing device (18) for the direct or indirect conveying of the granulate to an extruder precontainer (32), the dispensing device being a suction device , **characterized in that** the fresh air rate for the suction device can be set continuously and that the suction outlet is provided with an adjustable granulate retaining diaphragm (17).

2. Device according to claim 1, **characterized in that** the suction pipe (35) extends in horizontal or descending direction.

3. Device according to claim 2, **characterized in that** the suction device is arranged directly in the area of the device for the mixing of the plastic granulate (12) , the device for the mixing of the granulate plastics being a rotating agitating arm (13).

4. Device according to one of the preceding claims, **characterized in that** a conveyor apparatus (21) is provided between the storage container (10) and the extruder precontainer (32) to which the plastic granulate is guided via the suction device.

5. Device according to claim 4, **characterized in that** downstream of the conveyor apparatus is situated an intermediary container which presents a perpendicular pipe presenting a narrow construction , this intermediary container being able to receive the whole granulate quantity evacuated from the conveyor apparatus (21).

6. Device according to claim 5, **characterized in that** the intermediary container (25) is at least divided into two parts and that the inferior part (27) of the intermediary container is rigidly connected with a vibratory channel (30) arranged in the inferior area of the intermediary container and that the upper part (26) of the intermediary container (25) is connected to the inferior part of the intermediary container via a flexible sleeve (28).

7. Device according to claim 5 or 6, **characterized in that** the plastic granulates (12) is dosed via a vibratory channel (30) to the extruder precontainer (32).

8. Device according to one of the preceding claims, **characterized in that** a sensor (11, 24, 29, 34) for detecting the filling level is provided on the extruder precontainer (32) and / or on the intermediary container (25) and / or on the conveying apparatus (21) and / or on the storage container (10) and whereby a sensor for setting the different filling levels is continuously or discontinuously arranged in a sliding manner .

9. Device according to one of the preceding claims, **characterized in that** the operations are made by means of an electronic control , especially SPS control beginning with the mixing of the plastics granulate in the storage container (10) to the dosage of the plastics granulate into the extruder precontainer (32) and that this control detects also perturbations.

## Revendications

1. Dispositif pour transporter un granulé de matière plastique , notamment un granulé de silicone , constitué d'un réservoir (10), d'un dispositif disposé dans le réservoir (10) destiné à ameublir un granulé de matière plastique (129) et d'un dispositif de répartition (18) pour transporter directement ou indirectement un granulé vers un préréservoir (32) d'extrudeuse, le dispositif de répartition étant un dispositif d'aspiration, **caractérisé en ce que** la part d'air frais pour le dispositif d'aspiration peut être réglée de façon continue et que la sortie d'aspiration est pourvue d'un diaphragme de rétention de granulé (17) réglable.

2. Dispositif selon la revendication 1, **caractérisé en ce que** la conduite d'aspiration (35) s'étend en direction horizontale ou descendante.

3. Dispositif selon la revendication 2, **caractérisé en ce que** le dispositif d'aspiration est disposé directement dans la zone du dispositif par ameublissement du granulé de matière plastique du granulé de matière plastique (12), le dispositif pour l'ameublissement du granulé de matière plastique est un bras mélangeur (13) rotatif.

4. Dispositif selon une des revendications précédentes, **caractérisé en ce que** l'on a prévu entre le réservoir (10) et le préréservoir (3) d'extrudeuse un appareil de transport (21) vers lequel on amène le granulé de manière plastique via le dispositif d'aspiration.

5. Dispositif selon la revendication 4, **caractérisé en ce que** l'on a prévu en aval par rapport à l'appareil de transport un récipient intermédiaire (25) qui comporte un tube perpendiculaire présentant une construction mince , ce récipient intermédiaire pouvant recevoir toute la quantité de granulé évacuée de l'appareil de transport (21).

6. Dispositif selon la revendication 5, **caractérisé en ce que** le récipient intermédiaire (25) est au moins divisé en deux parties et que la partie inférieure (27) du récipient intermédiaire est reliée de façon rigide avec un canal oscillant (30) disposé dans la zone inférieure du récipient intermédiaire et que la partie supérieure (26) du récipient intermédiaire (25) est reliée via un manchon flexible (28) avec la partie inférieure du récipient intermédiaire.

7. Dispositif selon la revendication 5 ou 6, **caractérisé en ce que** le dosage du granulé de matière plastique est effectué au moyen du canal oscillant (30) dans le réservoir (32) d'extrudeuse.

8. Dispositif selon une des revendications précédentes, **caractérisé en ce que** l'on a prévu un capteur sur le réservoir d'extrudeuse (32) et / ou sur le récipient intermédiaire (25) et / ou sur l'appareil de transport (21) et / ou sur le réservoir (10) pour détecter le niveau de remplissage où au moins un capteur est disposé de façon coulissante et de façon continue ou discontinue pour ajuster différents hauteurs de niveau de remplissage.

9. Dispositif selon une des revendications précédentes, **caractérisé en ce que** les procédures se déroulent à partir de l'ameublissement du granulé de matière plastique dans le réservoir (10) jusqu'au dosage du granulé de matière plastique dans le réservoir d'extrudeuse (32) avec une commande électronique , notamment une commande SPS et que cette commande reconnaît des perturbations dans le système.
